(19) Europäisches Patentamt / European Patent Office / Office européen des brevets

(11) **EP 3 327 696 B1**

(12) **EUROPEAN PATENT SPECIFICATION**

(45) Date of publication and mention
of the grant of the patent:
**17.03.2021 Bulletin 2021/11**

(21) Application number: **17201683.4**

(22) Date of filing: **14.11.2017**

(51) Int Cl.:
**G08G 1/015** (2006.01)  **G08G 1/04** (2006.01)
**G08G 1/16** (2006.01)  **G06K 9/00** (2006.01)
**G06K 9/52** (2006.01)  **G06T 7/73** (2017.01)
**G06T 7/246** (2017.01)

(54) **INFORMATION PROCESSING APPARATUS, IMAGING DEVICE, DEVICE CONTROL SYSTEM, MOBILE BODY, INFORMATION PROCESSING METHOD, AND PROGRAM**

INFORMATIONSVERARBEITUNGSVORRICHTUNG, BILDGEBUNGSVORRICHTUNG, VORRICHTUNGSSTEUERUNGSSYSTEM, MOBILER KÖRPER, INFORMATIONSVERARBEITUNGSVERFAHREN UND PROGRAMM

APPAREIL DE TRAITEMENT D'INFORMATIONS, DISPOSITIF D'IMAGERIE, SYSTÈME DE COMMANDE DE DISPOSITIF, CORPS MOBILE, PROCÉDÉ DE TRAITEMENT D'INFORMATIONS ET PROGRAMME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.11.2016 JP 2016226692**
**06.09.2017 JP 2017171533**

(43) Date of publication of application:
**30.05.2018 Bulletin 2018/22**

(73) Proprietor: **Ricoh Company, Ltd.**
**Tokyo 143-8555 (JP)**

(72) Inventor: **WATANABE, Genki**
**Tokyo, 143-8555 (JP)**

(74) Representative: **SSM Sandmair**
**Patentanwälte Rechtsanwalt**
**Partnerschaft mbB**
**Joseph-Wild-Straße 20**
**81829 München (DE)**

(56) References cited:
**JP-A- 2006 293 835**      **US-A1- 2003 138 133**
**US-A1- 2006 115 115**   **US-A1- 2007 211 919**
**US-A1- 2015 294 160**

- **VON SEELEN W ET AL: "Scene analysis and organization of behavior in driver assistance systems", IMAGE PROCESSING, 2000. PROCEEDINGS. 2000 INTERNATIONAL CONFERENCE ON SEPTEMBER 10-13, 2000, IEEE, PISCATAWAY, NJ, USA, vol. 3, 10 September 2000 (2000-09-10), pages 524-527, XP010529519, ISBN: 978-0-7803-6297-0**

**Description**

## BACKGROUND OF THE INVENTION

### 1. Field of the Invention

The disclosures discussed herein relate to an information processing apparatus, an imaging device, a device control system, a movable body, and information processing method, and an information processing program.

### 2. Description of the Related Art

In vehicle safety, automobile body structures and the like have been developed from the perspectives of pedestrian and passenger protection against collision with pedestrians and other automobiles. Recent advances in information processing and image processing technologies have led to the development of high speed detection techniques for detecting people, automobiles, etc. Automobiles applied with these technologies, which automatically apply brakes before collision in order to prevent collision, are already on sale.

In order to apply brakes automatically, measuring the distance between an automobile and an object such as a person, another automobile, etc., is mandatory; hence, measurement using images of stereo cameras has been put into practical use.

In such measurement using the images obtained by stereo cameras, a tracking technique is known. In this tracking technique, an object such as a vehicle in front of a tracking vehicle that has been detected in a parallax image of a certain frame is detected in parallax images of the subsequent frames (e.g., see Japanese Laid-open Patent Publication No. 10-283462).

In the related-art technologies, however, when a person performs a behavior such as suddenly opening wide his/her arms, there may be a relatively large difference between the position of an object such as the person as detected from the previous frame and the position of an object such as the person who opens wide his/her arms as detected from the current frame. In such a situation, there may be cases of not being able to track an object as a same object.

US 2015/294160 A1 describes an object detection apparatus mountable to a moveable apparatus for detecting an object existing outside the moveable apparatus by capturing a plurality of images using a plurality of imaging devices mounted to the moveable apparatus and generating a disparity image from the captured images includes a map generator to generate a map indicating a frequency profile of disparity values correlating a horizontal direction distance of the object with respect to a movement direction of the moveable apparatus, and a distance to the object in the movement direction of the moveable apparatus based on the disparity image, an isolated area detection unit to detect an isolated area based on the frequency profile, an isolated area divider to divide the isolated area into two or more isolated areas based on the frequency profile in the isolated area, and an object detector to detect an object based on the divided isolated area.

## SUMMARY OF THE INVENTION

The invention is defined by the subject-matter of the independent claims. The dependent claims are directed to advantageous embodiments.

## ADVANTAGES OF THE INVENTION

Advantageously, it is provided a technique capable of continuously maintaining highly accurate tracking.

According to the disclosed technology, highly accurate tracking may be continued.

Other features and advantages of the present invention will become more apparent from the following detailed description when read in conjunction with the accompanying drawings.

## BRIEF DESCRIPTION OF THE DRAWINGS

FIG. 1 is a diagram illustrating a configuration of a device control system according to an embodiment;

FIG. 2 is a diagram illustrating configurations of an imaging unit and an image analysis unit according to the embodiment;

FIG. 3 is a diagram illustrating the principle of calculating a distance from a parallax value by utilizing the principle of triangulation;

FIG. 4 is a functional block diagram illustrating an example of the device control system 1;

FIGS. 5A and 5B are diagrams illustrating parallax image data and a V map generated from the parallax image data;

FIGS. 6A and 6B are diagrams illustrating an example of a captured image as a reference image captured by one imaging unit, and an example of a V map corresponding to the captured image;

FIG. 7 is a diagram illustrating an example of an image schematically illustrating an example of a reference image;

FIGS. 8A and 8B are diagrams illustrating U maps each corresponding to an example of an image;

FIG. 9 is a diagram illustrating a real U map corresponding to a U map;

FIG. 10 is a diagram illustrating a method of obtaining a value on a horizontal axis of a real U map from a value on a horizontal axis of the U map;

FIG. 11 is a flowchart illustrating an example of an isolated region detection process;

FIG. 12 is a diagram illustrating a real frequency U map in which rectangular regions having respective inscribed isolated regions detected by the isolated region detector are set;

FIG. 13 is a diagram illustrating a parallax image in which scanning ranges corresponding to respective rectangular regions are set;

FIG. 14 is a diagram illustrating a parallax image in which object regions are set by searching the respective scanning ranges;

FIG. 15 is a flowchart illustrating a process flow performed by a corresponding parallax image region detector and an object region extracting unit;

FIG. 16 is a diagram illustrating an example of table data for classifying object types;

FIG. 17 is a diagram illustrating an example of a three-dimensional position determination process;

FIGS. 18A to 18C are diagrams illustrating a method of calculating a position of an object such as a vehicle; and

FIGS. 19A and 19B are diagrams illustrating a method of calculating a position of an object that is a pedestrian, a motorcycle, or a bicycle.

## DETAILED DESCRIPTION OF THE PREFERRED EMBODIMENTS

The following illustrates a device control system having an image processing apparatus according to an embodiment.

CONFIGURATION OF DEVICE CONTROL SYSTEM

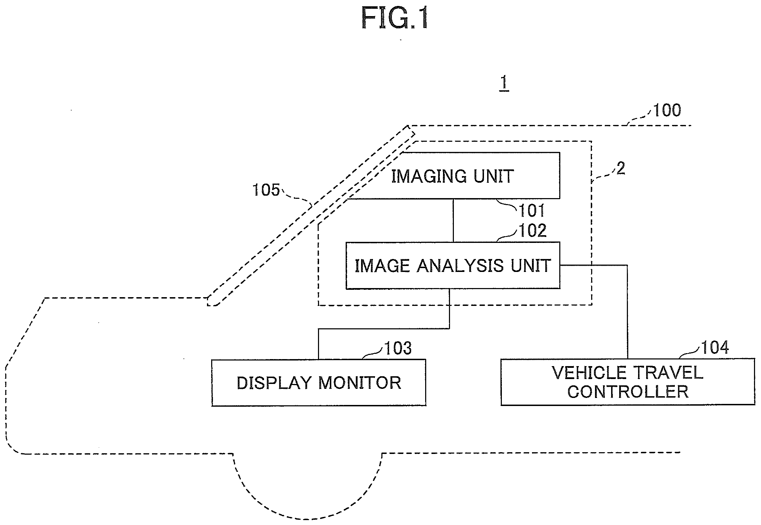

FIG. 1 is a diagram illustrating a configuration of a device control system according to an embodiment.

The device control system 1 is installed in a (tracking) vehicle 100 such as an automobile that is a movable body, and includes an imaging unit 101, an image analysis unit 102, a display monitor 103, and a vehicle travel control unit 104. The imaging unit 101 detects an object in front of the tracking vehicle 100 from multiple pieces of captured image data (frames) in a forward region (imaging region) in a moving direction of the vehicle to track the object, and controls the movable body (the tracking vehicle) and various in-vehicle devices using the tracking results. The control of the moving body includes, for example, transmission of warning signals, control of a steering wheel of the tracking vehicle 100 (the movable body), or braking of the tracking vehicle 100 (the movable body).

For example, the imaging unit 101 is disposed in the vicinity of a rearview mirror (not illustrated) of a windshield 105 of the tracking vehicle 100. Various data such as captured image data obtained by imaging by the imaging unit 101 are input into the image analysis unit 102 acting as an image processing tool.

The image analysis unit 102 analyzes the data transmitted from the imaging unit 101 to detect a relative height (positional information) at each point on a traveling road surface ahead of the tracking vehicle 100 with respect to a road surface portion (a road surface portion directly beneath the tracking vehicle 100) on which the tracking vehicle 100 is moving, to obtain a three-dimensional shape of the moving road surface ahead of the tracking vehicle. Further, the image analysis unit 102 recognizes recognition objects such as other vehicles ahead of the tracking vehicle, pedestrians, various obstacles, etc.

The analysis results of the image analysis unit 102 are sent to the display monitor 103 and the vehicle travel control unit 104. The display monitor 103 displays captured image data obtained by the imaging unit 101 and analysis results. The display monitor 103 is not a mandatory component and may be omitted. The vehicle travel control unit 104 may, for example, send a warning signal to a driver of the tracking vehicle 100 or perform travel support control such as controlling the steering wheel and brake of the tracking vehicle, based on the recognition results of the recognition object such as another vehicle, pedestrian, or various obstacles in front of the vehicle obtained by the image analysis unit 102.

CONFIGURATIONS OF IMAGING UNIT 101 AND IMAGE ANALYSIS UNIT 102

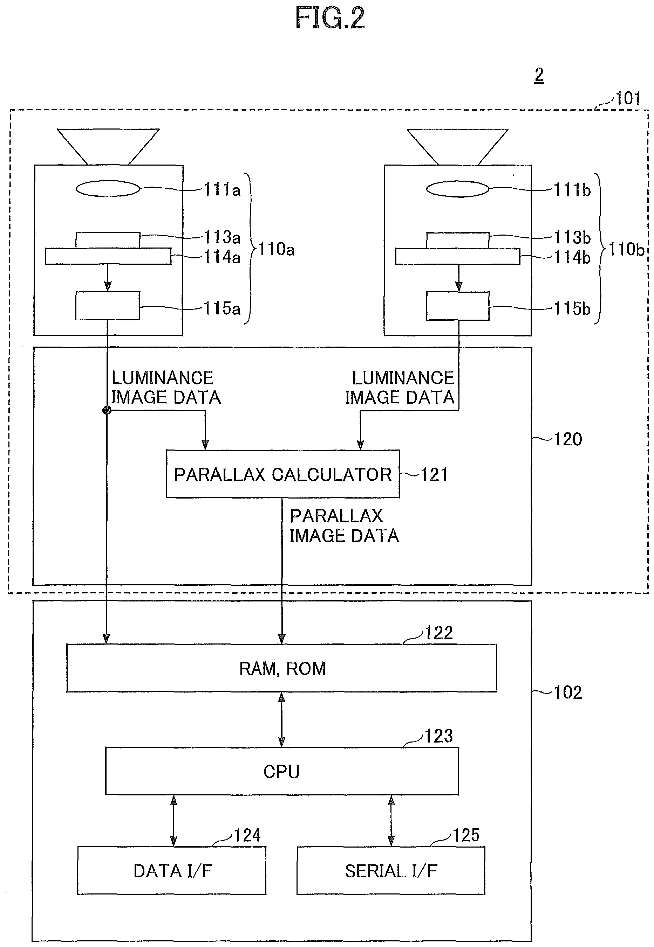

FIG. 2 is a diagram illustrating configurations of the imaging unit 101 and the image analysis unit 102 according to the embodiment.

The imaging unit 101 includes a stereo camera having two imaging units 110a and 110b as imaging tools, and the two imaging units 110a and 110b are the same components. The imaging units 110a and 110b include imaging lenses 111a and 111b, sensor substrates 114a and 114b including image sensors 113a and 113b having two-dimensionally arranged light receiving elements, and analog signals (i.e., electric signals corresponding to the amount of light received by the light receiving elements on the image sensors 113a and 113b) output from the sensor substrates 114a and 114b, and signal processors 115a and 115b configured to generate and output captured image data obtained by converting analog electric signals (electric signals corresponding to amounts of light received by respective light receiving elements on the image sensors 113a and 113b) into digital electric signals. The imaging unit 101 outputs luminance image data and parallax image data.

In addition, the imaging unit 101 includes a process hardware unit 120 including a Field-Programmable Gate Array (FPGA) or the like. In order to obtain parallax images from the luminance image data output from the imaging units 110a and 110b, the process hardware unit 120 includes a parallax calculator 121 as a parallax image information generating tool to calculate a parallax value of a corresponding image portion between the captured images respectively captured by the imaging units 110a and 110b.

The parallax value referred to in this configuration is as follows; one of the captured images captured by the imaging units 110a and 110b is assumed as a reference image and the other is assumed as a comparison image, the positional deviation corresponding to the same point in the imaging region is calculated as a parallax value of the image portion between an image portion of the comparison image and an image portion of the reference image. By utilizing the principle of triangulation, a distance to the same point in the imaging region corresponding to the image portion may be calculated based on the parallax value of the image portion.

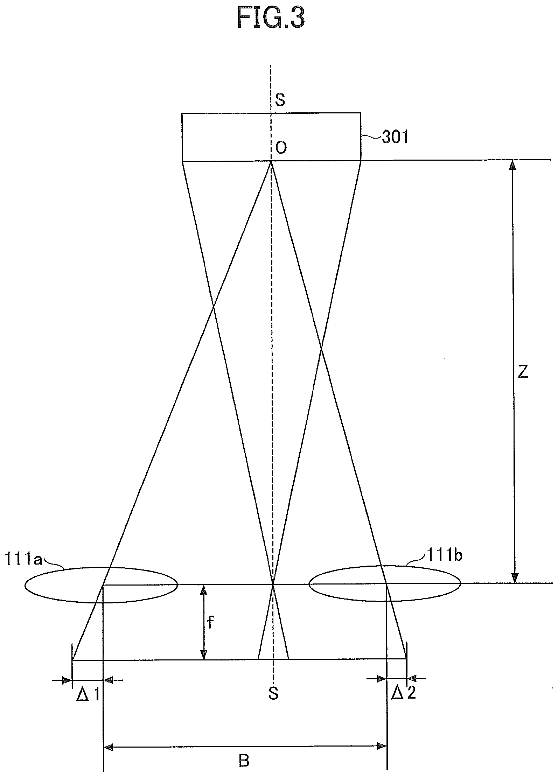

FIG. 3 is a diagram illustrating the principle of calculating a distance based on the parallax value by utilizing the principle of triangulation. In FIG. 3, f is the focal distance of each of the imaging lenses 111a and 111b, and B represents a length of a baseline that is a distance between the imaging lenses 111a and 111b of the imaging units 110a and 110b, and also depicts a distance from the optical axis in FIG. 3. Further, Z is a distance (a distance in a direction parallel to the optical axis) from the imaging lenses 111a and 111b to the subject 301. In this figure, image forming positions of the left and right images with respect to a certain point O on a subject 301 are $\Delta 1$ and $\Delta 2$, respectively, from the centers of the formed images. The parallax value d in this case may be defined as $d = \Delta 1 + \Delta 2$.

The following description is given by referring back to FIG. 2. The image analysis unit 102 includes an image processing board or the like and includes a storage unit 122 composed of a RAM, a ROM or the like configured to store the luminance image data and the parallax image data output from the imaging unit 101, a Central Processing Unit (CPU) 123 configured to execute a computer program for performing parallax calculation control and the like, a data interface (I/F) 124, and a serial I/F 125.

The FPGA constituting the process hardware unit 120 executes a process requiring real-time processing on image data, for example, gamma correction, distortion correction (parallelization of left and right captured images), and parallax calculation by block matching to generate parallax images and write the generated information in the RAM of the image analysis unit 102. The CPU of the image analysis unit 102 is responsible for controlling the image sensor controller of each of the imaging units 110A and 110B and overall control of the image processing board. The CPU of the image analysis unit 102 also loads a program for executing a process of detecting a three-dimensional shape of a road surface, a process of detecting a guardrail and various objects (objects), and the like from the ROM, executes various kinds of processes by inputting the luminance image data and the parallax image data stored in the RAM, and outputs the process results to the outside from the data I/F 124 and the serial I/F 125. Upon execution of such processes, vehicle operation information, such as vehicle speed and acceleration (mainly acceleration in a longitudinal direction of the vehicle), steering angle, and yaw rate of the tracking vehicle 100, is input via the data I/F 124, which may be used as parameters of various kinds of processes. The data output to the outside may be used as input data for controlling the various devices of the tracking vehicle 100 (brake control, vehicle speed control, warning control, etc.).

Note that the imaging unit 101 and the image analysis unit 102 may be configured as an imaging device 2, as is an integrated device.

OBJECT DETECTION PROCESS

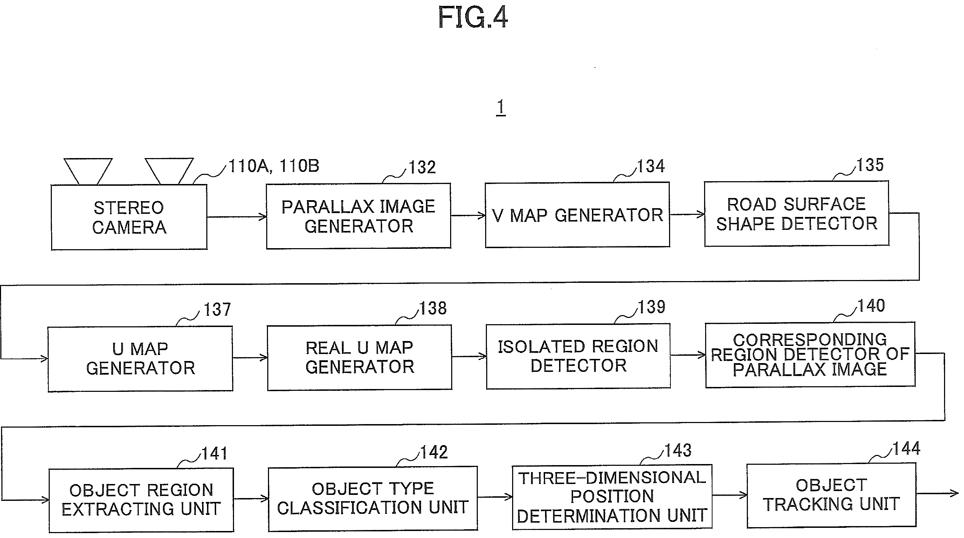

Next, the following illustrates a function of the object detection process implemented by the process hardware unit 120 and the image analysis unit 102 in FIG. 2. FIG. 4 is a functional block diagram illustrating an example of the device control system 1. The following illustrates an object detection process in the present embodiment.

Luminance image data is output from the two imaging units 110a and 110b constituting the stereo camera. In a case where the imaging units 110a and 110b are color, color luminance conversion for obtaining a luminance signal (Y) from RGB signals is performed using, for example, the following formula (1).

$$Y = 0.3R + 0.59G + 0.11B \dots\dots (1)$$

PARALLAX IMAGE GENERATION PROCESS

Next, a parallax image generator 132 composed of a parallax calculator 121 performs a parallax image generation process to generate parallax image data (i.e., an example of the parallax image information that is "information including the position in the vertical direction, the position in the horizontal direction, and the position in the depth direction of the detecting target that are associated with one other"). In the parallax image generation process, first, the luminance image data of one of the two imaging units 110a and 110b is set as reference image data, the luminance image data of the other imaging unit 110b is set as comparison image data, parallax between the two sets of the luminance image data is calculated, parallax image data based on the calculated parallax is generated and the parallax image data is output. The parallax image data indicates a parallax image, which expresses a pixel value according to a parallax value d calculated for each of image portions on the reference image data, as a pixel value of a corresponding one of the image portions.

V MAP GENERATION PROCESS

Next, the V map generator 134 acquires parallax image data from the parallax image generator 132 and executes a V map generating process to generate a V map. Each parallax pixel data included in the parallax image data is indicated by a set (x, y, d) of the x direction position, the y direction position, and the parallax value d. Parallax pixel data that is transformed into three-dimensional coordinate information (d, y, f), where d is on the X axis, y is on the Y axis, and frequency f on the Z axis, or into three dimensional coordinate information (d, y, f) that is limited to information exceeding a predetermined frequency threshold value with respect to the original three-dimensional coordinate information (d, y, f), is generated as parallax histogram information. The parallax histogram information of the present embodiment is composed of three-dimensional coordinate information (d, y, f), and this three-dimensional histogram information distributed in the XY two-dimensional coordinate system is referred to as a V map (parallax histogram map, V-disparity map).

More specifically, the V map generator 134 calculates the parallax value frequency distribution for each row region of the parallax image data obtained by dividing the image into multiple parts in a vertical direction. The information indicating the parallax value frequency distribution is parallax histogram information.

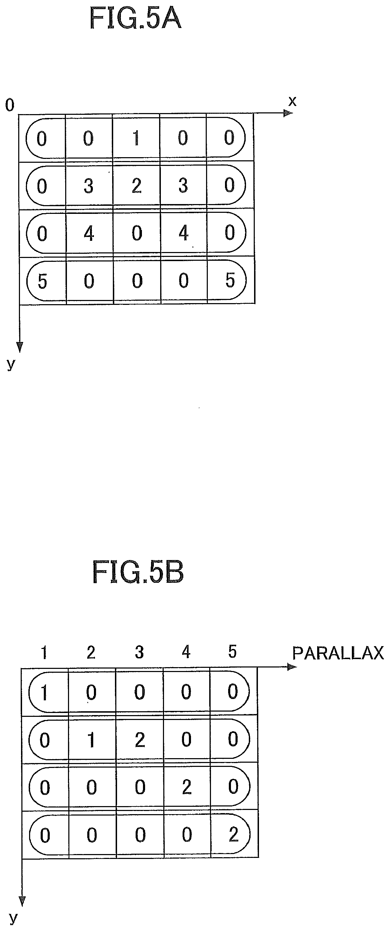

FIGS. 5A and 5B are diagrams illustrating parallax image data and a V map generated from the parallax image data. FIG. 5A is a diagram illustrating an example of parallax value distribution of the parallax image, and FIG. 5B is a diagram illustrating a V map indicating the parallax value frequency distribution for each row of the parallax image in FIG. 5A.

When parallax image data having a parallax value distribution as illustrated in FIG. 5A is input, the V map generator 134 calculates a parallax value frequency distribution that is a distribution of the number of data of each parallax value for each row, and outputs the calculated parallax value frequency distribution as parallax histogram information. Information on the parallax value frequency distribution of each row obtained in this manner is represented on a two-dimensional orthogonal coordinate system, where a y-direction position (vertical position of the captured image) on the parallax image is taken on the Y-axis and the parallax value is taken on the X-axis, thereby obtaining a V map as illustrated in FIG. 5B. The V map may be expressed as an image composed of pixels that have pixel values according to the frequency f and that are distributed on a two-dimensional orthogonal coordinate system.

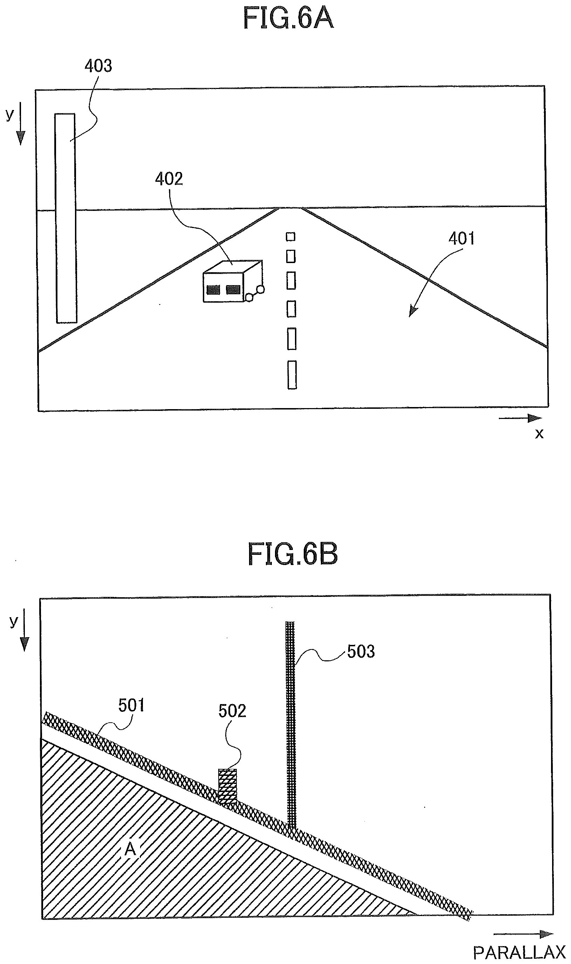

FIGS. 6A and 6B are diagrams illustrating an example of a captured image as a reference image captured by one imaging unit and an example of a V map corresponding to the captured image, respectively. Note that FIG. 6A depicts the captured image, and FIG. 6B depicts the V map. That is, the V map illustrated in FIG. 6B is generated from the captured image as illustrated in FIG. 6A.

The example of an image in FIG. 6A depicts a road surface 401 on which the tracking vehicle is moving, a preceding vehicle 402 existing in front of the tracking vehicle, and the utility pole 403 existing outside the road. The V map in FIG. 6B depicts a road surface 501, a preceding vehicle 502, and a utility pole 503 corresponding to the example of the image of FIG. 6A.

ROAD SURFACE SHAPE DETECTING PROCESS

Next, according to the present embodiment, the road surface shape detector 135 executes a road surface shape detection process for detecting a three-dimensional shape of the road surface ahead of the tracking vehicle 100 based on the V map information (parallax histogram information) generated by the V map generator 134.

In the example of the image in FIG. 6A, a relatively flat road surface of the road surface ahead of the tracking vehicle 100 matches a virtual reference road surface (virtual reference moving surface). In other words, a road surface in front of the tracking vehicle 100, which extends parallel to the road surface portion directly under the tracking vehicle 100 toward a frontward direction of the vehicle, matches a virtual reference road surface (virtual reference moving surface). In this case, in a lower part of the V map corresponding to a lower part of the image, high frequency points (the road surface 501) are distributed in a substantially linear manner with a slope such that the parallax value d decreases toward the upper part of the image. Pixels indicating such distribution are present at approximately the same distance in each row on the parallax image and occupy the highest proportion. Furthermore, the pixels indicating such distribution reflect a detection target having a distance becoming continuously farther toward the upper part of the image.

The imaging unit 110a captures an image in a front region of the tracking vehicle, and the content of the captured image indicates that the parallax value d of the road surface decreases toward the upper part of the image in FIG. 6B. Further, the pixels displaying the road surface have substantially the same parallax value d in the same row (horizontal line). Accordingly, the high frequency points (road surface 501) distributed along an approximation straight line in the V map correspond to the feature of the pixels depicting the road surface (moving surface). Accordingly, the pixels of the points, which are distributed on or near the approximation straight line obtained by linearly approximating high frequency points on the V map, may be estimated to be pixels depicting the road surface with high accuracy. Further, the distance to the road surface portion displayed by the pixels may be obtained with high accuracy from the parallax value d of the corresponding one of points on the approximate straight line. Note that by estimating the road surface, the height of the road surface may be obtained, and therefore, it is possible to obtain the height of an object on the road surface. This indicates that the height of an object on the road surface may be calculated by a known method. For example, it is assumed that an equation of a line representing the estimated road surface is obtained in advance, and a y coordinate y0 corresponding to the parallax value d = 0 is taken as the height of the road surface. For example, for the y coordinate being y' at the parallax value d, and y'-y0 indicates the height from the road surface for the parallax value d. The height H from the road surface of the above-mentioned coordinates (d, y') may be obtained by the arithmetic expression H = (Z * (y'-y0))/f. Note that "Z" in this arithmetic expression is a distance (Z = BF/(d-offset)) calculated from the parallax value d, and "f" is a value obtained by converting a focal distance of the imaging units 110a and 110b into the same units as that of (y'-Y0). Note that "BF" is a value obtained by multiplying a baseline length B, which is a length between the imaging units 110a and 110b, by the focal distance f, and "offset" is a parallax value obtained from a captured image of an object located at infinity.

U MAP GENERATION PROCESS

Next, as a U map generation process for generating the U map (U-disparity map), the U map generator 137 performs a frequency U map generation process and a height U map generation process.

In the frequency U map generation process, the U map generator 137 generates an XY two-dimensional histogram information based on a set (x, y, d), where x is an x direction position, y is a y direction position, and d is a parallax value for each parallax pixel data included in the parallax image data, by setting x in the X axis, d in the Y axis, and the frequency in the Z axis. This XY two-dimensional histogram information is referred to a frequency U map. The U map generator 137 of the present embodiment generates a frequency U map having only points (x, y, d) of the parallax image having heights H from the road surface in a predetermined height range (e.g., 20 cm to 3 m). In this case, it is possible to appropriately extract an object existing in the predetermined height range from the road surface.

Further, in the height U map generation process, the U map generator 137 generates an XY two-dimensional histogram information based on the set (x, y, d), where x is an x direction position, y is a y direction position, and d is a parallax value for each parallax pixel data included in the parallax image data, by setting x in the X axis, d in the Y axis, and the height from the road surface in the Z axis. This XY two-dimensional histogram information is referred to a height U map. The value of the height in this case is the highest one from the road surface.

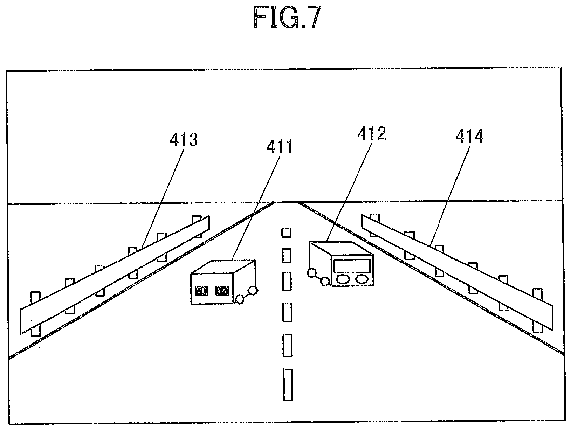

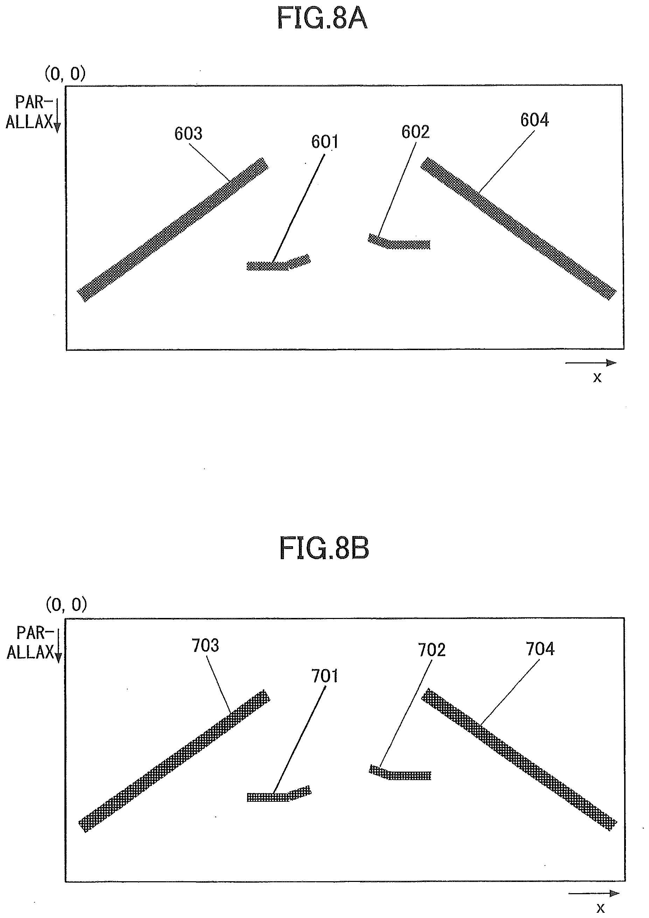

FIG. 7 is an example of an image schematically illustrating an example of a reference image taken by the imaging unit 110a, and FIGS. 8A and 8B are U maps corresponding to the example of the image in FIG. 7. Note that FIG. 8A is a frequency U map, and FIG. 8B is a height U map.

In the image example shown in FIG. 7, the guardrails 413 and 414 are present on the left and right sides of a road surface, and other vehicles represent a preceding vehicle 411 and an oncoming vehicle 412. In the frequency U map, as illustrated in FIG. 8A, the high frequency points distributed corresponding to the left and right guardrails 413 and 414 are substantially linear shapes 603 and 604 extending upward toward the center from the left and right end sides. In contrast, high frequency points corresponding to the preceding vehicle 411 and the oncoming vehicle 412 are distributed between the right and left guardrails as line segments 601 and 602 extending in parallel to a substantially X axis direction. Note that in a situation where the side portions of these preceding vehicle 411 and oncoming vehicle 412 are displayed in addition to the back portion of the preceding vehicle 411 or the front portion of the oncoming vehicle 412, parallax may occur in an image region where the same other vehicle is displayed. In such a case, as illustrated in FIG. 8A, high frequency points corresponding to another vehicle represent a distribution of a line segment extending in parallel to an approximately X axis direction, which is coupled to a line segment tilted with respect to the approximately X axis direction.

Further, in the height U map, the highest points from the road surface in the left and right guard rails 413, 414, the preceding vehicle 411, and the oncoming vehicle 412 are distributed in the same manner as the frequency U map. Heights for a distribution 701 of the points corresponding to the preceding vehicle and of a distribution 702 of the points corresponding to the oncoming vehicle may be higher than heights for the distributions 703 and 704 of the points corresponding to the guardrails. Height information of an object in the height U map may be used for object detection.

REAL MAP GENERATION PROCESS

Next, a description is given of a real U map generator 138. As a U map generation process for generating a real U map (Real U-disparity map) (e.g., an example of "distribution data"), the real U map generator 138 performs a real frequency U map generation process and a real height U map generation process.

The real U map is generated by converting each of the pixels of the image along the horizontal axis in the U map into an actual distance and by converting a parallax value along the vertical axis into a thin-out parallax having a thin-out rate according to the distance. Note that the real U map mentioned here may also be called to be an overhead view image (bird's-eye view image) in which the real space is viewed in a bird's eye view.

In the real frequency U map generation process, the real U map generator 138 generates XY two-dimensional histogram information based on a set (x, y, d), where x is an x direction position, y is a y direction position and d is a parallax value in each parallax pixel data included in the parallax image data, by setting the actual distance in the horizontal direction in X axis, the thin-out parallax in the Y axis, and the frequency in the Z axis. Similar to the U map generator 137, the real U map generator 138 of the present embodiment generates a real frequency U map having only points (x, y, d) of the parallax image having heights H from the road surface in a predetermined height range. Note that the real U map generator 138 may generate a real U map based on the U map generated by the U map generator 137.

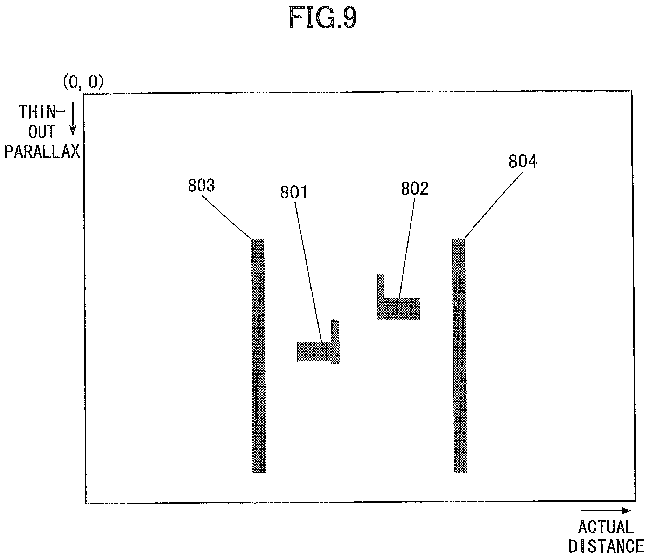

FIG. 9 is a diagram illustrating a real U map (hereinafter referred to as "real frequency U map") corresponding to the frequency U map illustrated in FIG. 8A. As illustrated in FIG. 9, the left and right guardrails are represented by vertical linear patterns 803 and 804, and the preceding vehicle and the oncoming vehicle are also represented by patterns 801 and 802 close to the actual shapes of the preceding vehicle and the oncoming vehicle.

The thin-out parallax of the vertical axis is defined such that no thin-out is applied to the long distance (in this case, 50 m or more), 1/2 thin-out is applied to the medium distance (20 m or more and less than 50 m), and 1/3 thin-out is applied to the short distance (10 m or more, less than 20 m), and 1/8 thin-out is applied to the very short distance (less than 10 m).

In other words, the farther the distance, the smaller the amount of thin-out. The reason for the above arrangement is as follows. Since an object situated at a long distance is captured as being small in size, the amount of the parallax data is small, and the distance resolution is also small. Hence, the amount of the thin-out is reduced. In contrast, since an object situated at a close distance is imaged as being large in size, the parallax data is large, and the distance resolution is large. Hence, the amount of the thin-out is increased.

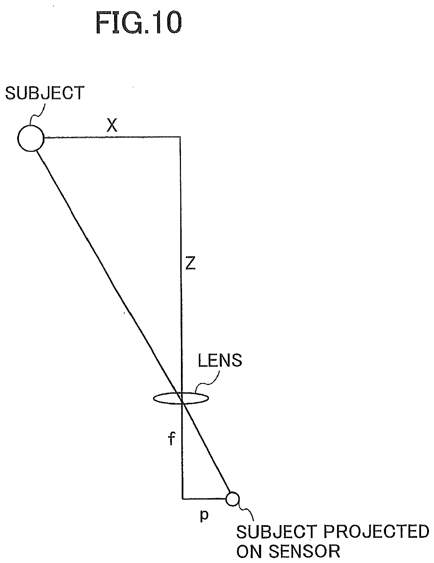

A method of converting the pixels of an image along the horizontal axis into the actual distance, i.e., an example of a method of obtaining (X, d) of the real U map from (x, d) of the U map will be described with reference to FIG. 10.

A width between a left position and a right position each at a distance of 10 m from camera, that is, a width of 20 m, is set as an object detection range. Assuming that the width of one pixel in the horizontal direction of the real U map is 10 cm, the horizontal size of the real U map corresponds to the width of 200 pixels.

It is assumed that in FIG. 10, f is a focal distance of the camera, p is a position of the camera in horizontal direction from the camera center, Z is a distance from the camera to the subject, and X is a position of the subject in the horizontal direction from the camera center. Assuming that a pixel size of the sensor is s, a relationship between x and p is expressed as "x = p/s". Further, there is a relationship expressed as "Z = Bf/d" obtained based on the characteristics of the stereo camera.

Further, as illustrated in FIG. 10, there is a relationship expressed as "X = p*Z/f", and thus "X" may be expressed by the formula "X = s * B/d". X is an actual distance, and the width of one pixel in the horizontal direction on the real U map is 10 cm. This indicates that the position X on the real U map may be easily calculated.

A real U map (hereinafter referred to as real height U map) corresponding to the height U map illustrated in FIG. 8B may also be generated by following the same procedure.

The real U map has a height in the vertical or horizontal direction smaller than that of the U map, which may provide an advantageous effect of processing at high rates. Further, since the horizontal direction in the real U map does not depend on distance, the same object may be detected with the same width regardless of the distance. This may also provide an advantageous effect of simplifying removal of subsequent processes of peripheral regions or of simplifying determination as to horizontal separation and vertical separation (width threshold process).

The length of the U map in the vertical direction is determined based on the shortest measurable distance. That is, since "d = Bf/Z", the maximum value of d is determined according to the smallest (shortest) measurable value of Z. Further, the parallax value d is normally calculated in units of pixels in processing a stereo image. However, the parallax value d includes a decimal portion. Hence, the parallax value is multiplied by a predetermined value to round off the decimal portion of the resulting parallax value to the nearest integer, which is used as the parallax value as a result.

When the smallest measurable Z becomes 1/2, the parallax value d is doubled. Thus, the U map data is drastically increased as a result. Accordingly, to generate a real U map, more pixels are thinned out as distance becomes nearer to compress data of the real U map, and to thus reduce the amount of data of the real U map to be smaller than the amount of data of a U map.

As a result, it is possible to perform object detection by using labeling at a higher speed.

ISOLATED REGION DETECTION

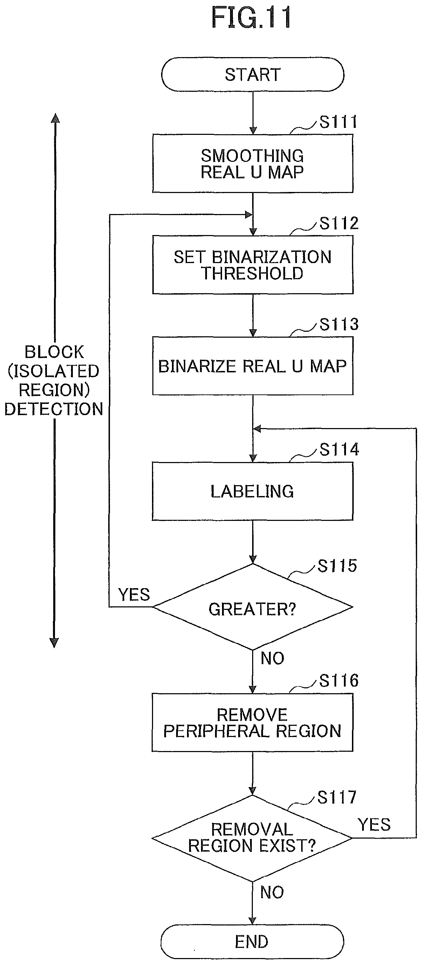

Next, a description is given of an isolated region detection process performed by the isolated region detector 139. FIG. 11 is a flowchart illustrating an example of an isolated region detection process. The isolated region detector 139 first performs smoothing of information of the real frequency U map generated by the real U map generator 138 (step Sill).

The frequency values are averaged in order to facilitate the detection of an effective isolated region. In other words, the parallax value may include a calculation error and may thus vary, and the parallax value is not calculated for all pixels. Hence, the real U map includes noise, which differs from the schematic diagram illustrated in FIG. 9. Accordingly, the real U map is smoothed in order to remove noise and to facilitate separation of the object to be detected. This smoothing of the real U map may, similar to the smoothing of the image, provide an effect of facilitating the subsequent isolated region detection process; that is, a smoothing filter (simple average of $3 \times 3$ pixels arithmetic averaging filter) is applied to the frequency value of the real U map (real frequency U map) such that the frequency considered as noise is decreased and the frequency in the object portion that is greater than that of the surroundings may be collected as a group, which facilitates the subsequent isolated region detection process.

Next, a binarization threshold value is set (step S112). Initially, binarization of the smoothed real U map is performed using a small value (= 0) (step S113). Then, labeling of coordinates of a non-zero value is performed to detect an isolated region (step S114).

These two steps S112 and S114 are performed to detect an isolated region (to be referred to as an "island") whose frequency is higher than the frequency of the surroundings in the real frequency U map. In order to detect the isolated region, the real frequency U map is initially binarized (step S113). Binarization is initially performed with a threshold value 0. Binarization is initially performed with a smallest threshold value 0 in order to handle various types of islands; some islands are isolated while others are connected to another island due to the height or the shape of an object, separation from the road parallax, and the like. That is, binarizing the real frequency U map from a smaller threshold value to initially detect isolated islands having an appropriate size, and increasing the threshold value gradually to subsequently separate the connected islands to be detected as isolated islands having an appropriate size, are performed.

Labeling is used as a method of detecting islands after binarization. The binary coordinates (coordinates whose frequency value is higher than the binarization threshold value) are labeled on the basis of the connectivity, and regions labeled with the same label are regarded as an island.

With respect to each of the detected isolated regions, the size of the isolated region is determined (assessed) (step S115). The size of the isolated region is determined in order to determine whether the width of each isolated region is within a size range corresponding to an object to be detected, which may vary from a pedestrian to a large automobile. When the size of the isolated region is greater than the corresponding size range (step S115: YES), the binarization threshold is incremented by one (step S112), and binarization is performed only within the isolated regions of the real frequency U map (step S113). Subsequently, labeling is performed, a smaller isolated region is detected (step S114), and the size of the smaller isolated region is determined (step S115).

A process from the above-described threshold setting to the labeling is repeatedly performed to detect an isolated region of a desired size. When an isolated region of a desired size is detected (step S115: NO), a peripheral region of the detected isolated region with the desired size is subsequently removed (step S116). This process is detailed as follows. In a case where the accuracy of the road surface detection is poor for the object at a distance, the parallax of the road surface is introduced into the real U map, and the parallax between the object and the road surface is detected as one block, a peripheral region of the detected block having the height close to the road surface (the peripheral portion within the isolated region) is removed. When there is a removal region (step S117: YES), labeling is performed again to reset an isolated region (step S114).

## DETECTION OF CORRESPONDING REGION OF PARALLAX IMAGE AND EXTRACTION OF OBJECT REGION

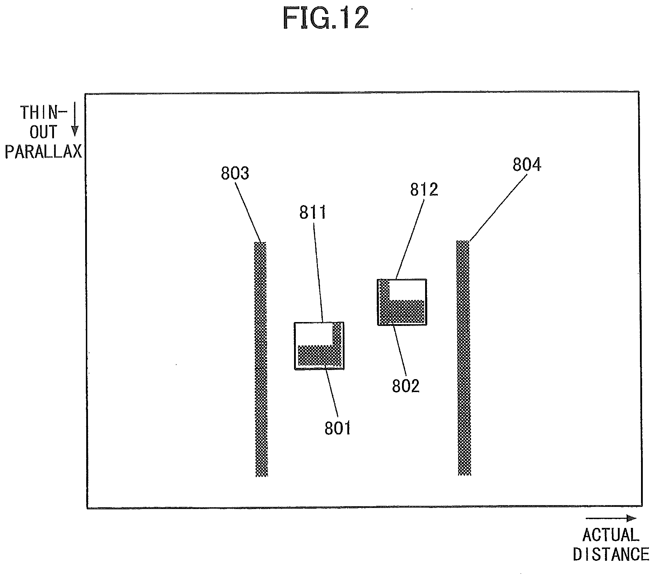

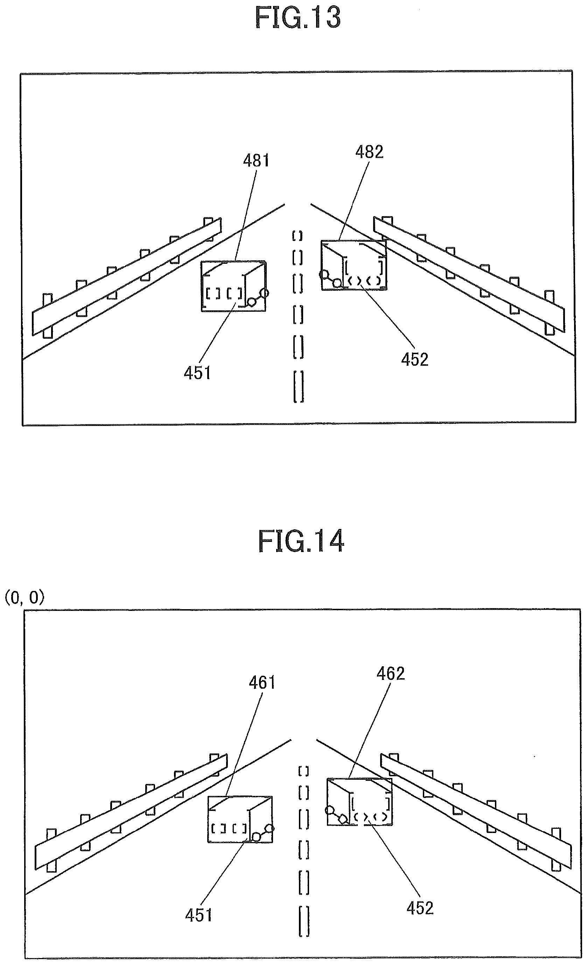

Next, a description is given of a corresponding parallax image region detector 140 and an object region extracting unit 141. FIG. 12 is a diagram illustrating a real frequency U map in which rectangular regions having respective inscribed isolated regions detected by the isolated region detector are set; FIG. 13 is a diagram illustrating a parallax image in which scanning ranges corresponding to the rectangular regions in FIG. 12 are set; and FIG. 14 is a diagram illustrating a parallax image in which the object regions are set by searching the respective scanning ranges in FIG. 13.

The isolated regions determined as candidate object regions by the isolated region detector 139 will be described. As illustrated in FIG. 12, when a first detected island 811 and a second detected island 812 are set as rectangular regions having respective inscribed first vehicle 801 and second vehicle 802 as the isolated regions, the width (the length in the X axis direction on the U map) of the rectangular region corresponds to the width of an identification object (object) corresponding to the isolated region. Further, the height of the set rectangular region corresponds to the depth (length in the traveling direction of the vehicle) of the identification object (object) corresponding to the isolated region. The height of the identification object (object) corresponding to each isolated region is unknown at this point. The corresponding parallax image region detector 140 detects a region on the parallax image corresponding to the isolated region in order to obtain the height of the object associated with the isolated region of the candidate object region.

Based on the isolated region information output from the isolated region detector 139, the corresponding parallax image region detector 140 determines an x direction range (xmin, xmax) of the first detected island corresponding region scanning range 481 and the second detected island corresponding region scanning range 482 to be detected in the parallax image illustrated in FIG. 13, based on respective positions, widths and minimum parallax of the first detected island 811 and the second detected island 812 that are detected from the real U map. Further, the corresponding parallax image region detector 140 determines the height and position (from y min = "y coordinate value corresponding to the maximum height from the road surface at the object maximum parallax d max" to ymax = "y coordinate value indicating the height of the road surface obtained from the object maximum parallax dmax") of the object in the parallax image.

Next, in order to detect the exact positions of the objects, the set scanning range is scanned and pixels having parallax values of the range of the rectangular depth (minimum parallax dmin, maximum parallax dmax) detected by the isolated region detector 139 are extracted as candidate pixels. Then, a line having a predetermined ratio or more in the horizontal direction with respect to the detection width in the extracted candidate pixel group is set as a candidate object line.

Next, the scanning is performed in the vertical direction; in a case where the density of other candidate object lines present around a specific candidate object line is predetermined density or more, the specific candidate object line is determined as an object line.

Next, the object region extracting unit 141 searches a search region of the parallax image for the object line, determines the lowermost end and the uppermost end of the object line, and determines circumscribed rectangles 461 and 462 of the object line group as the regions 451 and 452 of the objects (the first vehicle, the second vehicle) in the parallax image as illustrated in FIG. 14.

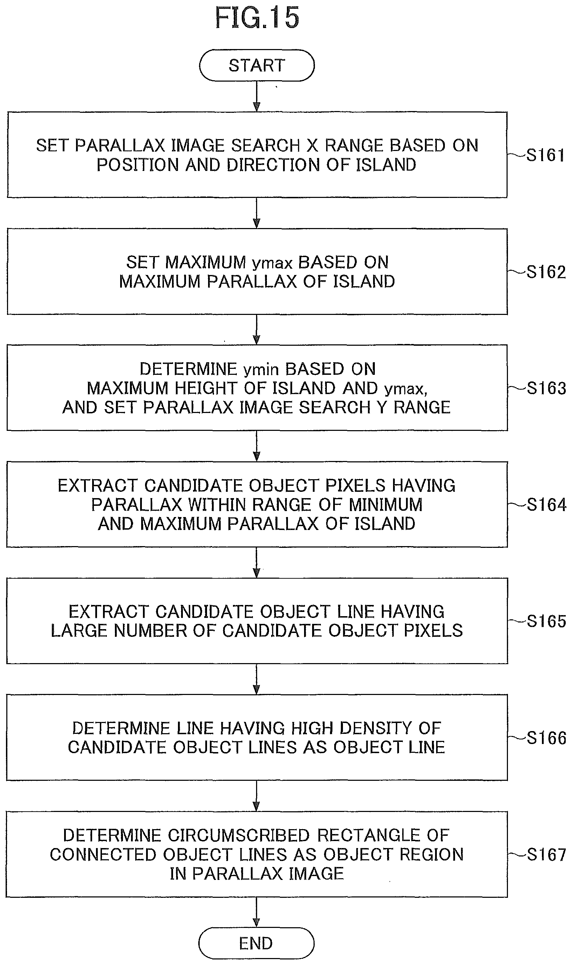

FIG. 15 is a flowchart illustrating a process flow performed by a corresponding parallax image region detector 140 and an object region extracting unit 141. First, a search range in the x axis direction with respect to the parallax image is set based on the position, width and minimum parallax of the island in the real U map (step S161).

Next, the maximum search value ymax in the y axis direction with respect to the parallax image is set based on a relationship between the maximum parallax dmax of the island and the height of the road surface (step S162). Then, a minimum search value ymin in the y axis direction with respect to the parallax image is obtained, based on the maximum height of the island in the real height U map and ymax and dmax set in step S172, and a search range in the y axis direction with respect to the parallax image is set (step S163).

Next, the set search range is searched for a parallax image to extract pixels within a range of the minimum parallax dmin and the maximum parallax dmax of the island to be candidate object pixels (step S164). When the candidate object pixels are located at a certain ratio or more in the horizontal direction, the line of the candidate object pixels is extracted as a candidate object line (step S165).

The density of the candidate object lines is calculated, and when the density of the candidate object lines is greater than a predetermined value, the line extracted as the candidate object line is determined as the object line (step S166). Finally, the circumscribed rectangle of the object line group is detected as the object region within the parallax image (step S167).

As a result, the identification object (object, body) may be recognized.

## OBJECT TYPE CLASSIFICATION

Next, an object type classification unit 142 will be described.

Based on the height (yomax-yomin) of the object region extracted by the object region extracting unit 141, the actual height Ho of the identification object (object) displayed in the image region corresponding to the object region may be calculated by the following expression . Note that "zo" is a distance between an object corresponding to the object region and the subject vehicle calculated based on the minimum parallax value d within the object region, "f" is a value obtained by converting the focal length of the camera into the same unit of (yomax-yomin).

$$Ho = zo * (yomax-yomin)/f \ldots\ldots\ldots (2)$$

Similarly, based on the width (xomax-xomin) of the object region extracted by the object region extracting unit 141, the actual width Wo of the identification object (object) displayed in the image region corresponding to the object region may be calculated by the following expression.

$$Wo = zo * (xomax - xomin)/f \ldots\ldots\ldots (3)$$

Further, based on the maximum parallax dmax and the minimum parallax dmin within the isolated region corresponding to the object region, the depth Do of the identification object (object) displayed in the image region corresponding to the object region is calculated by the following expression.

$$Do = BF \times \{(1/(dmin - offset) - 1/(dmax - offset)\} \ldots\ldots\ldots (4)$$

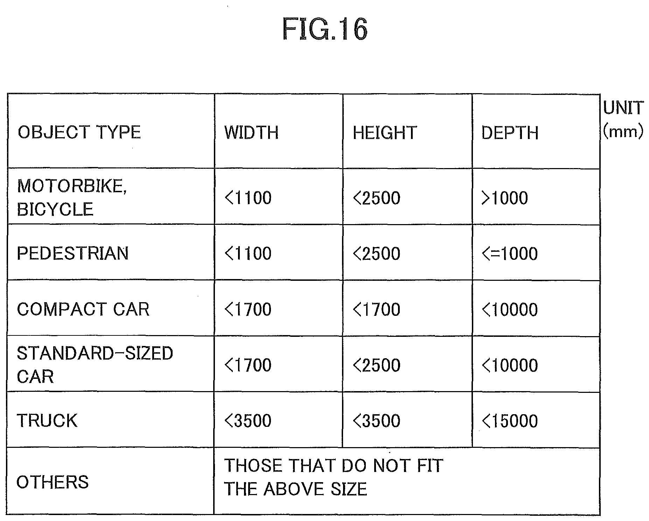

The object type classification unit 142 classifies the object type based on the information on the height, width, and depth of the object corresponding to the object region that may be calculated in this way. The table depicted in FIG. 16 indicates an example of table data for classifying object types. In the example of FIG. 16, for example, an object having a width less than 1100 mm, a height less than 250 mm, and a depth exceeding 1000 mm is determined as a "motorcycle, bicycle" type. Likewise, an object having a width less than 1100 mm, a height less than 250 mm, and a depth 1000 mm or less is determined as a "pedestrian" type. According to this classification, it becomes possible to distinguish and recognize whether the identification object (object) present in front of the vehicle is a pedestrian, a bicycle or a motorcycle, a compact car, a truck or the like. The above-described method is merely an example. In the present embodiment, various methods may be used insofar as the classification of the object type and the position of the object may be specified.

3D POSITION DETERMINATION

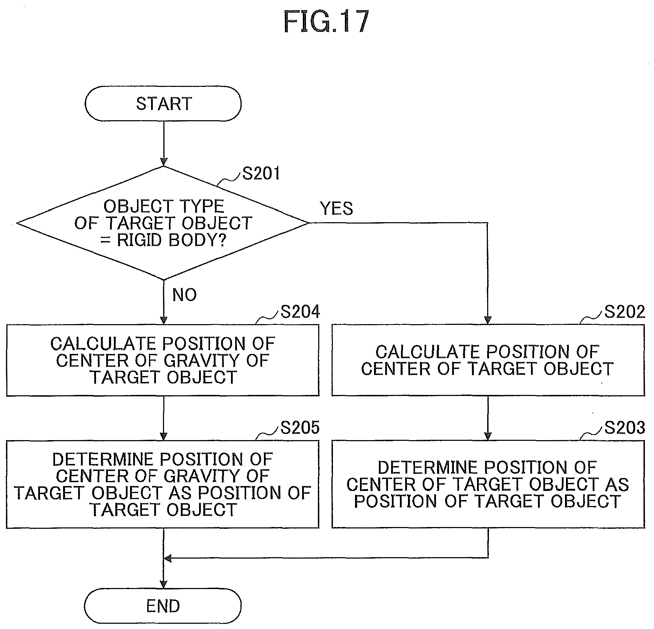

Next, a description is given of the three-dimensional position determination unit 143 with reference to FIG. 17. The three-dimensional position determination unit 143 determines a relative three-dimensional position of the identification object (object) with respect to the tracking vehicle 100.

FIG. 17 is a diagram illustrating an example of a three-dimensional position determination process. In FIG. 17, a process with respect to one object (target object) among the objects extracted by the object region extracting unit 141 will be described. Accordingly, the three-dimensional position determination unit 143 performs the process of FIG. 17 on each object extracted by the object region extraction unit 141.

In step S201, the three-dimensional position determination unit 143 determines whether the object type of the target object is a non-rigid body type (an example of "first type"). The rigid body is an object that does not deform, and the type that is a rigid body is, for example, "compact car", "ordinary car", "truck", or the like. In contrast, a non-rigid body type includes, for example, "pedestrians", "motorcycles, bicycles", and the like. The motorcycle and the bicycle themselves are rigid bodies; however, they are determined as a non-rigid body type because a driver of the motorcycle or bicycle is not a rigid body.

In a case where the object type is a rigid body type (an example of "second type") (YES in step S201), the three-dimensional position determination unit 143 calculates the center position of the target object (step S202). Based on the distance to the object corresponding to the detected object region, and based on the distance on the image between the image center of the parallax image and the center of the object region on the parallax image, the three-dimensional position determination unit 143 calculates the center position in the three-dimensional coordinates of the object by the following formulas, for example.

When the center coordinates of the object region on the parallax image are (region_centerX, region_centerY) and the image center coordinates of the parallax image are (image_centerX, image_centerY), the center position Xo in the horizontal direction and the center position Yo in the height direction relative to the imaging units 110a and 110b may be calculated based on the following formulas and .

$$Xo = Z \times (region\_centerX - image\_centerX)/f \ldots\ldots\ldots (5)$$

$$Yo = Z \times (region\_centerY - image\_centerY)/f \ldots\ldots\ldots (6)$$

Subsequently, the three-dimensional position determination unit 143 determines the position of the center of the target object as the position of the target object (step S203), and ends the process.

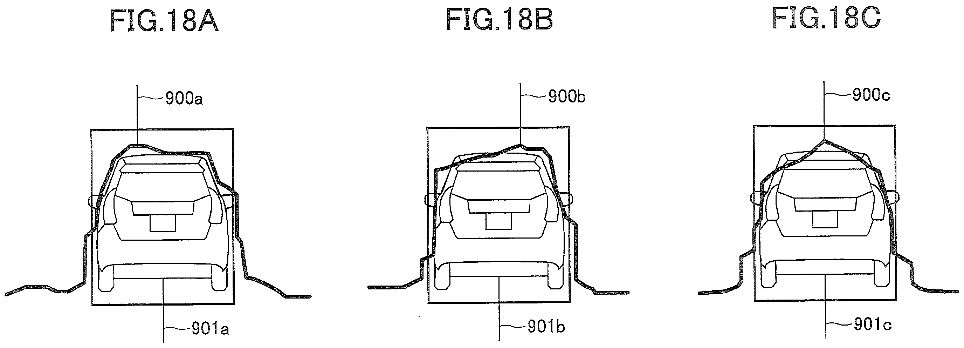

FIGS. 18A to 18C are diagrams illustrating a method of calculating a position of an object such as a vehicle. When the object type is not "pedestrian" or "motorcycle, bicycle", the three-dimensional position determination unit 143 determines, for example, the positions 901a, 901b, 901c at the center of the object region as the position of the target object. This method may reduce adverse effect of noise or the like, as compared with the method in which the positions 900a, 900b, 900c of the center of gravity of the target object as described later is determined as the position of the target object.

In contrast, in a case where the object type is "pedestrian" or "motorcycle, bicycle" (NO in step S201), the three-dimensional position determination unit 143 calculates the position of the center of gravity as the target object (step S204). Accordingly, the position in the horizontal direction of the target object may be determined by a method corresponding to the object type. That is, when the object type is a non-rigid body type, the position of the center of gravity in the horizontal direction of the object is determined as the position in the horizontal direction of the object. Further, when the object type is a rigid body type, the position of the center of the two ends in the horizontal direction of the object is determined as the position in the horizontal direction of the object.

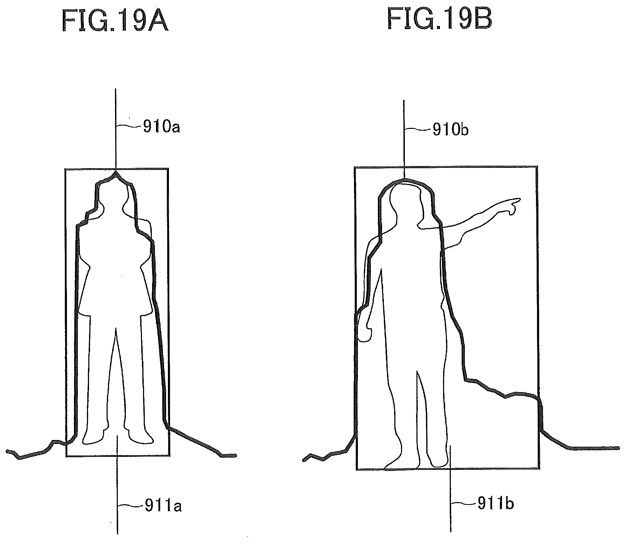

FIGS. 19A and 19B are diagrams illustrating a method of calculating a position of an object that is a pedestrian, a motorcycle, or a bicycle. In FIG. 19A, the position 910a of the center of gravity when a pedestrian crosses his arms is illustrated. In FIG. 19B, the position 910b of the center of gravity when a pedestrian lifts his arm is illustrated.

In step S204, the three-dimensional position determination unit 143 determines a corresponding region of the target object (e.g., as in the first detected island corresponding region scanning range 481 or the second detected island corresponding region scanning range 482 in FIG. 13) as a search range in the parallax image. Then, in the search range, the number of pixels indicating the parallax of the object is summed for each position in the horizontal direction (x direction). For example, the number of pixels having the parallax value d within a range between the maximum parallax value and the minimum parallax value of the object is summed for each position in the horizontal direction (x direction). Then, the three-dimensional position determination unit 143 sets the position in the horizontal direction having the largest total number of the pixels as the position of the center of gravity in the horizontal direction of the target object. Note that the position of the target object in the vertical direction may be obtained in the same manner as for the position of the center of gravity in the horizontal direction, or may be taken as the position in the center in the vertical direction.

Subsequently, the three-dimensional position determination unit 143 determines the position of the center of gravity of the target object as the position of the target object (step S205), and ends the process.

MODIFICATION OF METHOD OF CALCULATING POSITION OF CENTER OF GRAVITY

In step S204, the position of the center of gravity may be calculated as follows.

The three-dimensional position determination unit 143 may set the position in the horizontal direction, in which the height of the pixel indicating the parallax of the object is the highest in the search range described above, as the position of the center of gravity in the horizontal direction of the target object. This is because in a case where a pedestrian, a bicycle or the like is involved, a person's head may be considered to be located at the highest position.

Alternatively, the three-dimensional position determination unit 143 may recognize the head of a person by recognizing the image of the reference image and set the horizontal position of the head of the recognized person as the position of the center of gravity in the horizontal direction of the target object. As a method of recognizing a person's head, various known methods may be applied.

Alternatively, instead of calculating based on the search range in the parallax image, the three-dimensional position determination unit 143 may calculate the position of the center of gravity of the object, on the basis of the isolated region on the real U map corresponding to the object region extracted by the object region extraction unit 141. In this case, for example, in the isolated region, the three-dimensional position determining unit 143 calculates the total value of the parallax frequency along the Y axis for each position of each X coordinate. Then, the three-dimensional position determining unit 143 sets the X coordinate having the largest total value as the position of the center of gravity in the horizontal direction of the target object.

OBJECT TRACKING

Next, an object tracking unit 144 will be described. The object tracking unit 144 executes a process of tracking (tracking) an object (object) detected from the parallax image of the previous (past) frame.

The object tracking unit 144 causes the three-dimensional position determination unit 143 to predict the position of each object with respect to the parallax image of the current frame based on the position of each of the objects determined based on the previous frames of parallax images. Specifically, the object tracking unit 144 specifies the relative moving speed and moving direction between the object and the tracking vehicle 100 using the position of the object in each of the previous frames, and predicts the position of each object with respect to the parallax image of the current frame based on the moving speed and the moving direction. Known techniques may be applied to this object tracking process. However, in a case of performing object tracking process using the moving speed and moving direction, when the position of an object such as a person that is not a rigid body fluctuates between frames by extending his or her arm, the object is considered to have moved along with the fluctuation, which may result in an erroneous object tracking process. This erroneous object tracking process may be prevented by adopting the position of the center of gravity as described above. With respect to an object that is a rigid body, the adverse effect of noise and the like may be reduced by adopting a position based on the object region.

Then, the object tracking unit 144 may maintain tracking the object based on the similarity between the parallax image of the object region in the parallax image of the previous frame and the parallax image of the region of the parallax image of the current frame with respect to the predicted position. Thus, in the multiple frames, the same object may be recognized as the same object.

The object tracking unit 144 estimates the position of the object in a case where the parallax of an object has not been sufficiently measured due to reflection of sunlight, darkness or the like, or a pedestrian and an object adjacent to the pedestrian are erroneously determined as one object. In such a case, the object tracking unit 144 estimates the object region in the parallax image of the current frame, based on the relative moving speed and moving direction of the object with respect to the tracking vehicle 100 in the previous frames. In a case where the object is an object that is not a rigid body such as a person or the like, the object tracking unit 144 calculates the ratio of distance between the position of the right end and the position of the center of gravity, to distance between the position of the left end and the position of the center of gravity, in the horizontal direction of the object region of the object in the previous frames in order to obtain the position of the current center of gravity. Then, the object tracking unit 144 estimates the position obtained by dividing the horizontal distance of the object region estimated in the parallax image of the current frame by the ratio as the position of the center of gravity of the object in the parallax image of the current frame.

For example, in a case where the mean of the ratios of the distance between the position of the right end and the position of the center of gravity to the distance between the position of the left end and the position of the center of gravity of the object region of the object in the previous frames is 2:1, the position obtained by dividing the horizontal direction of the object region estimated in the parallax image of the current frame by 2 to 1 is estimated as the position of the center of gravity of the object in the parallax image of the current frame.

OUTLINE

In a case where a person such as a pedestrian, a bicycle driver or the like suddenly extends his/her arm(s) in a horizontal direction, the position of the center between two ends in the horizontal direction of an object rapidly changes, making it difficult to trace the object.

Further, in a case where predicting and tracking the position of the object in the current frame based on the position of the object in the previous frames, and a person such as a pedestrian or a bicycle driver suddenly extends his/her arm(s) in a horizontal direction, the destination to which his/her arm(s) is extend may be erroneously recognized as the moving direction of the person, and the prediction accuracy of the position may decrease.

According to the above-described embodiment, the position of the object in the parallax image is determined according to the type of the object. As a result, accurate tracking may be maintained.

Note that a value of a distance value (distance value) and a parallax value may be handled equivalently, the parallax image being used as an example of the distance image in the present embodiment; however, the present invention is not limited to this example. For example, a distance image may be generated by integrating distance information generated by using a detection device such as a millimeter wave radar or a laser radar with respect to a parallax image generated by using a stereo camera. Further, a combination of a stereo camera and another detection device such as a millimeter wave radar or a laser radar may combine a detection result of an object obtained by the other detection device with the detection result of the object obtained by the above-described stereo camera to further improve detection accuracy.

The system configuration in the above-described embodiment is merely an example, and various system configuration examples may also be applied according to intended use and purposes.

For example, the functional unit that performs at least a part of each of the functional units of the process hardware unit 120 and the image analysis unit 102 may be realized by cloud computing configured by one or more computers.

Further, the above-described embodiment illustrates an example in which the device control system 1 is mounted on a vehicle as the host vehicle 100; however, the present invention is not limited to this example. For example, it may be mounted on a vehicle such as a motorcycle, a bicycle, a wheelchair or an agricultural cultivating machine as an example of another vehicle. Further, the present invention may be applied not only to a vehicle as an example of a movable body but also to a movable body such as a robot.

In addition, each functional unit of the process hardware unit 120 and the image analysis unit 102 may be implemented by hardware, or may be implemented by the CPU executing a program stored in a storage device. The above-described program may be distributed in a form of a computer-readable recording medium storing the program in files of an installable format or executable format. Other examples of the recording medium may include a compact disc recordable (CD-R), a digital versatile disk (DVD), and a Blu-ray Disc. Alternatively, the program may be stored on a computer connected to a network such as the Internet and provided by being downloaded via the network. Further, the program may be provided or distributed via a network such as the Internet.

[Description of the Reference Numbers]

```
1 device control system
100 tracking vehicle
101 imaging unit
102 image analysis unit (an example of "information processing apparatus")
103 display monitor
104 vehicle travel controller (an example of "controller")
110a, 110b imaging unit
120 process hardware unit
132 parallax image generator (an example of "generator")
134 V map generator (an example of "acquisition unit")
135 road surface shape detector
137 U map generator
138 real U map generator
139 isolated region detector
140 parallax image corresponding region detector
141 object region extracting unit
142 object type classification unit (an example of "type determination unit")
143 three-dimensional position determination unit (an example of "position determination unit")
144 object tracking unit (an example of "tracking unit")
2 imaging device
```

The present invention is not limited to the specifically disclosed embodiments, and amendments, variations and modifications may be made without departing from the scope of the followings claims.

**Claims**

**1.** An information processing apparatus (102) comprising:

an acquisition unit (134) configured to acquire parallax image data from a parallax image generator (132), said parallax image data indicating a parallax image being information including a position in a vertical direction of an object, a position in a horizontal direction of the object, and a position in a depth direction of the object that are associated with one another, and to calculate a parallax value frequency distribution for each row region of the parallax image data obtained by dividing the image into multiple parts in a vertical direction;

an object region extracting unit (141) configured to search a search region of the parallax image for an object line, determine the lowermost end and the uppermost end of the object line, and determine circumscribed rectangles (461, 462) of an object line group as regions (451, 452) of the objects in the parallax image, wherein one circumscribed rectangle (461, 462) of the object line group is detected as the object region in the parallax image;

a type determination unit (142) configured to determine a type of the object based on information on a height, width and depth of an object corresponding to the object region;

a position determination unit (143) configured to determine a position of the object based on the type of the object determined by the type determination unit (142); and

a tracking unit (144) configured to track the object based on the position of the object determined by a position determination unit (143).

**2.** The information processing apparatus according to claim 1, wherein

the position determination unit (143) determines a position of the object by a first method using a position of a center of gravity of the object in response to the type of the object determined by the type determination unit (142) being a first type, and the position determination unit (143) determines a position of the object by a second method differing from the first method in response to the type of the object determined by the type determination unit (142) being a second type.

**3.** The information processing apparatus according to claim 2, wherein

the position determination unit (143) determines a position of the center of opposite ends in a horizontal direction of the object as the position of the object in response to the type of the object determined by the type determination unit (142) being the second type.

**4.** The information processing apparatus according to claim 2 or 3, wherein the position determination unit (143) determines the position of the center of gravity of the object in the horizontal direction, based on the number of pieces of information on the position in the depth direction corresponding to each position in the horizontal direction of the object included in the information.

**5.** An imaging device comprising:

a plurality of imaging units (110a, 110b) configured to capture an image; and

a generator (132) configured to generate information including a position in a vertical direction of an object, a position in a horizontal direction of the object, and a position in a depth direction of the object that are associated with one another, based on a plurality of images captured by the imaging units; and

the information processing apparatus according to any one of claims 1 to 4.

**6.** A device control system comprising:

the imaging device (2) according to claim 5; and

a controller (104) configured to control a movable body based on data of an object tracked by the tracking unit (144), wherein

the plurality of imaging units are mounted on the movable body to capture an image ahead of the movable body.

**7.** A movable body comprising:

the device control system according to claim 6, wherein the controller (104) controls the movable body.

**8.** An information processing method executed by a computer, the information processing method comprising:

acquiring parallax image data from a parallax image generator (132), said parallax image data indicating a parallax image being information including a position in a vertical direction of an object, a position in a horizontal direction of the object, and a position in a depth direction of the object that are associated with one another;

calculating a parallax value frequency distribution for each row region of the parallax image data obtained by dividing the image into multiple parts in a vertical direction;

searching a search region of the parallax image for an object line, determining the lowermost end and the uppermost end of the object line, and determining circumscribed rectangles (461, 462) of an object line group as regions (451, 452) of the objects in the parallax image, wherein one circumscribed rectangle (461, 462) of the object line group is detected as the object region in the parallax image;

determining a type of the object based on information on a height, width and depth of an object corresponding to the object region;

determining a position of the object based on the determined type of the object;

tracking the object based on the determined position of the object.

9. A computer program comprising instructions which, when the program is executed by a computer cause the computer to carry out the method of claim 8.

**Patentansprüche**

1. Informationsverarbeitungsvorrichtung (102), aufweisend:

   eine Erfassungseinheit (134), die konfiguriert ist, Parallaxenbilddaten von einer Parallaxenbilderzeugungseinrichtung (132) zu erfassen, wobei die Parallaxenbilddaten ein Parallaxenbild kennzeichnen, das aus Informationen besteht, die eine Position in einer vertikalen Richtung eines Objekts, eine Position in einer horizontalen Richtung eines Objekts und eine Position in einer Tiefenrichtung des Objekts enthalten, die miteinander verbunden sind, und eine Parallaxenwerthäufigkeitsverteilung für jeden Reihen- bzw. Zeilenbereich der Parallaxenbilddaten zu berechnen, die durch Dividieren des Bildes in mehrere Teile in einer vertikalen Richtung erlangt werden;
   eine Objektbereich-Extrahierungseinheit (141), die konfiguriert ist, einen Durchsuchungsbereich des Parallaxenbildes nach einer Objektlinie zu durchsuchen, das unterste Ende und das oberste Ende der Objektlinie zu bestimmen und definierte bzw. begrenzte Rechtecke (461, 462) einer Objektliniengruppe als Bereiche (451, 452) der Objekte in dem Parallaxenbild zu bestimmen, wobei ein definiertes bzw. begrenztes Rechteck (461, 462) der Objektliniengruppe als der Objektbereich in dem Parallaxenbild detektiert wird;
   eine Typbestimmungseinheit (142), die konfiguriert ist, einen Typ des Objektes zu bestimmen, basierend auf Informationen einer Höhe, Breite bzw. Weite und Tiefe eines Objekts entsprechend zu dem Objektbereich;
   eine Positionsbestimmungseinheit (143), die konfiguriert ist, eine Position des Objektes zu bestimmen, basierend auf dem Typ des Objektes, der durch die Typbestimmungseinheit (142) bestimmt wird; und
   eine Spurverfolgungs- bzw. Verfolgungseinheit (144), die konfiguriert ist, das Objekt zu verfolgen, basierend auf der Position des Objektes, die durch eine Positionsbestimmungseinheit (143) bestimmt wird.

2. Informationsverarbeitungsvorrichtung gemäß Anspruch 1, wobei die Positionsbestimmungseinheit (143) eine Position des Objektes bestimmt, und zwar durch ein erstes Verfahren, wobei eine Position eines Schwerpunktes des Objektes als Reaktion auf den Typ des Objektes verwendet wird, der durch die Typbestimmungseinheit (142) bestimmt wird, der ein erster Typ ist, und die Positionsbestimmungseinheit (143) bestimmt eine Position des Objektes durch ein zweites Verfahren, das von dem ersten Verfahren in Reaktion auf den Typ des Objektes abweicht, der durch die Typbestimmungseinheit (142) bestimmt wird, der ein zweiter Typ ist.

3. Informationsverarbeitungsvorrichtung gemäß Anspruch 2, wobei die Positionsbestimmungseinheit (143) eine Position des Zentrums bzw. der Mitte von entgegengesetzten Enden in einer horizontalen Richtung des Objekts als die Position des Objekts in Reaktion auf den Typ des Objekts bestimmt, der durch die Typbestimmungseinheit (142) bestimmt wird, der der zweite Typ ist.

4. Informationsverarbeitungsvorrichtung gemäß Anspruch 2 oder 3, wobei die Positionsbestimmungseinheit (143) die Position des Schwerpunkts des Objekts in der horizontalen Richtung bestimmt, basierend auf der Anzahl von Informationsteilen auf der Position in der Tiefenrichtung entsprechend zu der jeweiligen Position in der horizontalen Richtung des Objekts, die in den Information enthalten ist.

5. Bilderzeugungsvorrichtung, aufweisend:

   eine Mehrzahl von Bilderzeugungseinheiten (110a, 110b), die konfiguriert sind, ein Bild aufzunehmen; und
   eine Erzeugungseinrichtung (132), die konfiguriert ist, Informationen zu erzeugen, einschließlich einer Position in einer vertikalen Richtung eines Objekts, einer Position in einer horizontalen Richtung des Objekts, und einer Position in einer Tiefenrichtung des Objekts, die miteinander verbunden sind, und zwar basierend auf einer Mehrzahl von Bildern, die durch die Bilderzeugungseinheiten aufgenommen werden; und
   die Informationsverarbeitungsvorrichtung gemäß irgendeinem der Ansprüche 1 bis 4.

6. Vorrichtungssteuerungssystem, aufweisend:

   die Bilderzeugungsvorrichtung (2) gemäß Anspruch 5; und
   eine Steuereinrichtung (104), die konfiguriert ist, einen bewegbaren bzw. beweglichen Körper zu steuern, basierend auf Daten eines Objektes, das durch die Spurverfolgungs- bzw. Verfolgungseinheit (144) verfolgt wird, wobei

die Mehrzahl von Bilderzeugungseinheiten auf dem bewegbaren bzw. beweglichen Körper angebracht sind, um ein Bild vor dem bewegbaren bzw. beweglichen Körper aufzunehmen.

7. Bewegbarer bzw. beweglicher Körper, aufweisend:
das Vorrichtungssteuerungssystem gemäß Anspruch 6, wobei die Steuereinrichtung (104) den bewegbaren bzw. beweglichen Körper steuert.

8. Informationsverarbeitungsverfahren, das durch einen Computer ausgeführt wird, wobei das Informationsverarbeitungsverfahren aufweist:

Erfassen von Parallaxenbilddaten, von einer Parallaxenbilderzeugungseinrichtung (132), wobei die Parallaxenbilddaten ein Parallaxenbild kennzeichnen, das aus Informationen besteht, die eine Position in einer vertikalen Richtung eines Objekts, eine Position in einer horizontalen Richtung des Objekts, und eine Position in einer Tiefenrichtung des Objekts enthalten, die miteinander verbunden sind;
Berechnen einer Parallaxenwerthäufigkeitsverteilung für jeden Reihen- bzw. Zeilenbereich der Parallaxenbilddaten, die durch Dividieren des Bildes in mehrere Teile in einer vertikalen Richtung erlangt werden;
Durchsuchen eines Durchsuchungsbereichs des Parallaxenbildes für eine Objektlinie, Bestimmen des untersten Endes und des obersten Endes der Objektlinie, und Bestimmen definierter bzw. begrenzter Rechtecke (461, 462) von einer Objektliniengruppe als Bereiche (451, 452) des Objektes in dem Parallaxenbild, wobei ein definiertes bzw. begrenztes Rechteck (461, 462) der Objektliniengruppe als der Objektbereich in dem Parallaxenbild detektiert wird;
Bestimmen eines Typs des Objektes, basierend auf Informationen von einer Höhe, Breite bzw. Weite und Tiefe von einem Objekt, das dem Objektbereich entspricht; Bestimmen einer Position des Objektes, basierend auf dem bestimmten Typ des Objektes; Verfolgen des Objektes, basierend auf der bestimmten Position des Objektes.

9. Computerprogramm, aufweisend Befehle, welche, wenn das Programm durch einen Computer durchgeführt wird, den Computer veranlasst, das Verfahren von Anspruch 8 auszuführen.

**Revendications**

1. Appareil de traitement d'informations (102), comprenant :

une unité d'acquisition (134) configurée pour acquérir des données d'image parallaxe à partir d'un générateur d'image parallaxe (132), lesdites données d'image parallaxe indiquant une image parallaxe étant des informations incluant une position dans une direction verticale d'un objet, une position dans une direction horizontale de l'objet, et une position dans une direction de profondeur de l'objet qui sont associées les unes aux autres, et pour calculer une distribution de fréquence de valeur de parallaxe pour chaque région de rangée des données d'image parallaxe obtenue en divisant l'image en de multiples parties dans une direction verticale ;
une unité d'extraction de région d'objet (141) configurée pour rechercher, dans une région de recherche de l'image parallaxe, une ligne d'objet, déterminer l'extrémité la plus basse et l'extrémité la plus haute de la ligne d'objet, et déterminer des rectangles circonscrits (461, 462) d'un groupe de lignes d'objet en tant que régions (451, 452) des objets dans l'image parallaxe, dans lequel un rectangle circonscrit (461, 462) du groupe de lignes d'objet est détecté en tant que région d'objet dans l'image parallaxe ;
une unité de détermination de type (142) configurée pour déterminer un type de l'objet sur la base d'informations sur une hauteur, une largeur et une profondeur d'un objet correspondant à la région d'objet ;
une unité de détermination de position (143) configurée pour déterminer une position de l'objet sur la base du type de l'objet déterminé par l'unité de détermination de type (142) ; et
une unité de suivi (144) configurée pour suivre l'objet sur la base de la position de l'objet déterminée par une unité de détermination de position (143).

2. Appareil de traitement d'informations selon la revendication 1, dans lequel
l'unité de détermination de position (143) détermine une position de l'objet par l'intermédiaire d'un premier procédé utilisant une position d'un centre de gravité de l'objet en réponse au fait que le type de l'objet déterminé par l'unité de détermination de type (142) est un premier type, et l'unité de détermination de position (143) détermine une position de l'objet par l'intermédiaire d'un second procédé différent du premier procédé en réponse au fait que le type de l'objet déterminé par l'unité de détermination de type (142) est un second type.

3. Appareil de traitement d'informations selon la revendication 2, dans lequel
l'unité de détermination de position (143) détermine une position du centre d'extrémités opposées dans une direction horizontale de l'objet en tant que position de l'objet en réponse au fait que le type de l'objet déterminé par l'unité de détermination de type (142) est le second type.

4. Appareil de traitement d'informations selon la revendication 2 ou 3, dans lequel
l'unité de détermination de position (143) détermine la position du centre de gravité de l'objet dans la direction horizontale, sur la base du nombre d'éléments d'informations sur la position dans la direction de profondeur correspondant à chaque position dans la direction horizontale de l'objet inclus dans les informations.

5. Dispositif d'imagerie, comprenant :

une pluralité d'unités d'imagerie (110a, 110b) configurées pour capturer une image ; et
un générateur (132) configuré pour générer des informations incluant une position dans une direction verticale d'un objet, une position dans une direction horizontale de l'objet, et une position dans une direction de profondeur de l'objet qui sont associées les unes aux autres, sur la base d'une pluralité d'images capturées par les unités d'imagerie ; et
l'appareil de traitement d'informations selon l'une quelconque des revendications précédentes 1 à 4.

6. Système de commande de dispositif, comprenant :

le dispositif d'imagerie (2) selon la revendication 5 ; et
un organe de commande (104) configuré pour commander un corps mobile sur la base de données d'un objet suivi par l'unité de suivi (144), dans lequel
la pluralité d'unités d'imagerie sont montées sur le corps mobile pour capturer une image devant le corps mobile.

7. Corps mobile, comprenant :
le système de commande de dispositif selon la revendication 6, dans lequel l'organe de commande (104) commande le corps mobile.

8. Procédé de traitement d'informations exécuté par un ordinateur, le procédé de traitement d'informations comprenant :

l'acquisition de données d'image parallaxe à partir d'un générateur d'image parallaxe (132), lesdites données d'image parallaxe indiquant une image parallaxe étant des informations incluant une position dans une direction verticale d'un objet, une position dans une direction horizontale de l'objet, et une position dans une direction de profondeur de l'objet qui sont associées les unes aux autres ;
le calcul d'une distribution de fréquence de valeur de parallaxe pour chaque région de rangée des données d'image parallaxe obtenue en divisant l'image en de multiples parties dans une direction verticale ;
la recherche, dans une région de recherche de l'image parallaxe, d'une ligne d'objet, la détermination de l'extrémité la plus basse et de l'extrémité la plus haute de la ligne d'objet, et la détermination de rectangles circonscrits (461, 462) d'un groupe de lignes d'objet en tant que régions (451, 452) des objets dans l'image parallaxe, dans lequel un rectangle circonscrit (461, 462) du groupe de lignes d'objet est détecté en tant que région d'objet dans l'image parallaxe ;
la détermination d'un type de l'objet sur la base d'informations sur une hauteur, une largeur et une profondeur d'un objet correspondant à la région d'objet ;
la détermination d'une position de l'objet sur la base du type déterminé de l'objet ;
le suivi de l'objet sur la base de la position déterminée de l'objet.

9. Programme d'ordinateur comprenant des instructions qui, lorsque le programme est exécuté par un ordinateur, font en sorte que l'ordinateur réalise le procédé de la revendication 8.

# FIG.1

# FIG.2

LUMINANCE
IMAGE DATA

LUMINANCE
IMAGE DATA

PARALLAX CALCULATOR ~121

PARALLAX
IMAGE DATA

RAM, ROM

CPU

DATA I/F

SERIAL I/F

# FIG.3

FIG.4

1

STEREO CAMERA — 110A, 110B

PARALLAX IMAGE GENERATOR — 132

V MAP GENERATOR — 134

ROAD SURFACE SHAPE DETECTOR — 135

U MAP GENERATOR — 137

REAL U MAP GENERATOR — 138

ISOLATED REGION DETECTOR — 139

CORRESPONDING REGION DETECTOR OF PARALLAX IMAGE — 140

OBJECT REGION EXTRACTING UNIT — 141

OBJECT TYPE CLASSIFICATION UNIT — 142

THREE-DIMENSIONAL POSITION DETERMINATION UNIT — 143

OBJECT TRACKING UNIT — 144

# FIG.5A

# FIG.5B

# FIG.6A

# FIG.6B

# FIG.7

413  411  412  414

# FIG.8A

# FIG.8B

# FIG.9

# FIG.10

SUBJECT

X

Z

LENS

f

p

SUBJECT PROJECTED
ON SENSOR

# FIG.11

```
                    START

                            S111
              SMOOTHING
              REAL U MAP

                            S112
             SET BINARIZATION
               THRESHOLD

                            S113
BLOCK
(ISOLATED      BINARIZE REAL U MAP
 REGION)
DETECTION
                            S114
               LABELING

                            S115
    YES
              GREATER?

                    NO
                            S116
               REMOVE
           PERIPHERAL REGION

                            S117
             REMOVAL            YES
           REGION EXIST?

                    NO

                    END
```

# FIG.12

THIN-
OUT
PARALLAX

803

811

812

804

801

802

ACTUAL
DISTANCE

# FIG.13

# FIG.14

# FIG.15

START

SET PARALLAX IMAGE SEARCH X RANGE BASED ON POSITION AND DIRECTION OF ISLAND ~S161

SET MAXIMUM ymax BASED ON MAXIMUM PARALLAX OF ISLAND ~S162

DETERMINE ymin BASED ON MAXIMUM HEIGHT OF ISLAND AND ymax, AND SET PARALLAX IMAGE SEARCH Y RANGE ~S163

EXTRACT CANDIDATE OBJECT PIXELS HAVING PARALLAX WITHIN RANGE OF MINIMUM AND MAXIMUM PARALLAX OF ISLAND ~S164

EXTRACT CANDIDATE OBJECT LINE HAVING LARGE NUMBER OF CANDIDATE OBJECT PIXELS ~S165

DETERMINE LINE HAVING HIGH DENSITY OF CANDIDATE OBJECT LINES AS OBJECT LINE ~S166

DETERMINE CIRCUMSCRIBED RECTANGLE OF CONNECTED OBJECT LINES AS OBJECT REGION IN PARALLAX IMAGE ~S167

END

# FIG.16

| OBJECT TYPE | WIDTH | HEIGHT | DEPTH | UNIT (mm) |
|---|---|---|---|---|
| MOTORBIKE, BICYCLE | <1100 | <2500 | >1000 | |
| PEDESTRIAN | <1100 | <2500 | <=1000 | |
| COMPACT CAR | <1700 | <1700 | <10000 | |
| STANDARD-SIZED CAR | <1700 | <2500 | <10000 | |
| TRUCK | <3500 | <3500 | <15000 | |
| OTHERS | THOSE THAT DO NOT FIT THE ABOVE SIZE | | | |

# FIG.17

```
                    ┌─────────────┐
                    │    START    │
                    └─────────────┘
                           │
                           ▼
                        S201
                   ╱──────────────╲
                  ╱  OBJECT TYPE   ╲        YES
                 ╱  OF TARGET OBJECT ╲──────────────────────┐
                 ╲   = RIGID BODY?   ╱                       │
                  ╲────────────────╱                         │
                           │                                 │
                           │ NO                              │
                           ▼                                 ▼
                        S204                              S202
        ┌───────────────────────────┐      ┌───────────────────────────┐
        │   CALCULATE POSITION OF    │      │    CALCULATE POSITION OF   │
        │   CENTER OF GRAVITY OF     │      │   CENTER OF TARGET OBJECT  │
        │      TARGET OBJECT         │      │                            │
        └───────────────────────────┘      └───────────────────────────┘
                           │                                 │
                           ▼  S205                           ▼  S203
        ┌───────────────────────────┐      ┌───────────────────────────┐
        │   DETERMINE POSITION OF    │      │   DETERMINE POSITION OF    │
        │    CENTER OF GRAVITY OF    │      │  CENTER OF TARGET OBJECT AS│
        │ TARGET OBJECT AS POSITION OF│     │   POSITION OF TARGET OBJECT│
        │       TARGET OBJECT        │      │                            │
        └───────────────────────────┘      └───────────────────────────┘
                           │                                 │
                           ▼◄────────────────────────────────┘
                    ┌─────────────┐
                    │     END     │
                    └─────────────┘
```

33

FIG.18A

FIG.18B

FIG.18C

900a

901a

900b

901b

900c

901c

EP 3 327 696 B1

FIG.19A

FIG.19B

910a

910b

911a

911b

**EP 3 327 696 B1**

**REFERENCES CITED IN THE DESCRIPTION**

**Patent documents cited in the description**

- JP 10283462 A

- US 2015294160 A1